(19) Europäisches Patentamt
European Patent Office
Office européen des brevets

(11) **EP 2 607 626 B1**

(12) **EUROPÄISCHE PATENTSCHRIFT**

(45) Veröffentlichungstag und Bekanntmachung des Hinweises auf die Patenterteilung:
**08.09.2021   Patentblatt 2021/36**

(51) Int Cl.:
*F01D 5/14* *(2006.01)*      *F01D 5/22* *(2006.01)*
*F01D 9/04* *(2006.01)*

(21) Anmeldenummer: **11194441.9**

(22) Anmeldetag: **20.12.2011**

(54) **Turbomaschine und Turbomaschinenstufe**

Turbomachine and stage of a turbomachine

Turbomachine et étage de turbomachine

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**26.06.2013   Patentblatt 2013/26**

(73) Patentinhaber: **MTU Aero Engines AG**
**80995 München (DE)**

(72) Erfinder:
• **Mahle, Inga**
**77880 Sasbach (DE)**
• **Gier, Jochen**
**85757 Karsfeld (DE)**
• **Körber, Kai**
**85757 Karlsfeld (DE)**
• **Engel, Karl**
**85221 Dachau (DE)**

(56) Entgegenhaltungen:
EP-A1- 1 067 273      EP-A1- 1 515 000
EP-A1- 2 136 033      EP-A1- 2 369 138
WO-A1-2004/113685     JP-A- 2000 073 702

• **None**

**Beschreibung**

Die vorliegende Erfindung betrifft eine Turbomaschine, insbesondere eine Gasturbine, vorzugsweise eine Flugtriebwerk-Gasturbine, mit wenigstens einer Turbomaschinenstufe, insbesondere einer Kompressor- oder Turbinenstufe, mit einem Leit- und einem Laufgitter, sowie eine solche Turbomaschinenstufe.

Eine Turbomaschinenstufe weist ein Laufgitter mit rotierenden Laufschaufeln sowie ein stromauf- und/oder -abwärts benachbartes Leitgitter auf. Die Schaufeln enden fußseitig in einer Schaufelplattform. Auch spitzenseitig kann eine Schaufelplattform vorgesehen sein, etwa als Deckband von Leit- oder Laufschaufeln.

Zwischen Leit- und Laufgitter ist ein Axialspalt ausgebildet. Bei rotierendem Laufgitter werden in diesem Druckgradienten induziert, die über den Umfang variieren und Sekundärströmungen verursachen. Beispielsweise kann ein rotierendes Turbinenlaufgitter auf seiner Druckseite Arbeitsfluid in den Axialspalt drücken und umgekehrt auf seiner Saugseite aus dem Spalt fördern, was zu einer Ausgleichsströmung führt. Dies verschlechtert den Wirkungsgrad der Turbomaschine.

Aus der EP 2 372 102 A2 ist eine Gasturbine mit deckbandfreien Laufschaufeln bekannt. Für radial innere Schaufelplattformen von Leit- und Laufschaufeln wird eine nicht-axialsymmetrische, insbesondere radial und/oder axial wellenförmige, Kontur vorgeschlagen. Die Druckschrift gibt keinen Hinweis auf Größe und/oder Positionierung von Wellenbergen und -tälern. Nach den Zeichnungen sind in der Nähe von Schaufelvorder- und -hinterkanten von Leit- und Laufschaufeln jeweils Wellentäler ausgebildet.

EP 2 136 033 A1 offenbart eine Turbomaschinenstufe mit Leitschaufeln, die mit radial inneren und/oder radial äußeren Schaufelplattformen ein Leitgitter bilden. Ferner weist die Turbomaschinenstufe Laufschaufeln auf, die mit radial inneren und/oder radial äußeren Schaufelplattformen ein Laufgitter bilden, Zwischen dem Leitgitter und dem Laufgitter ist ein Axialspalt vorgesehen, der durch Spaltbereiche der Schaufelplattformen des Laufgitters und des Leitgitters begrenzt wird. Dabei variiert die Kontur des Spaltbereichs der Schaufelplattform des Laufgitters in radialer und/oder axialer Richtung über den Umfang.

EP 1 067 273 A1 offenbart eine Turbomaschinenstufe mit einer Laufschaufel, Die der Laufschaufel zugeordnete radiale äußere Schaufelplattform weist eine in axialer Richtung variierende Kontur auf, während die einer Leitschaufel zugeordnete radiale äußere Schaufelplattform eine in axialer Richtung nicht variierende Kontur aufweist.

Beispiele für Turbomaschinenstufen sind aus den Dokumenten EP 2 136 033 A1, EP 1 515 000 A1 und EP 2 369 138 A1 bekannt.

Aufgabe der vorliegenden Erfindung ist es, den Wirkungsgrad einer Turbomaschine, insbesondere einer Flugtriebwerk-Gasturbine, zu verbessern.

Zur Lösung dieser Aufgabe ist eine Turbomaschinenstufe nach dem Oberbegriff des Anspruchs 1 durch dessen kennzeichnendes Merkmal weitergebildet. Anspruch 6 stellt eine Turbomaschine mit einer oder mehrerer solcher Turbomaschinenstufen unter Schutz, die Unteransprüche betreffen vorteilhafte Weiterbildungen.

Eine erfindungsgemäße Turbomaschinenstufe weist mehrere, vorzugsweise äquidistant über den Umfang verteilte, Laufschaufeln auf, die fuß- bzw. rotorseitig mit radial inneren Schaufelplattformen verbunden, insbesondere integral ausgebildet sind. Spitzen- bzw. gehäuseseitig können die Laufschaufeln mit radial äußeren Schaufelplattformen verbunden, insbesondere integral ausgebildet sein. Laufschaufeln können einzeln oder in Gruppen lösbar oder unlösbar an einem Rotor(teil) der Turbomaschine befestigt, insbesondere integral mit diesem ausgebildet sein.

Stromauf- und/oder -abwärts des durch diese Laufschaufeln gebildeten Laufgitters sind mehrere, vorzugsweise äquidistant über den Umfang verteilte, Leitschaufeln lösbar oder unlösbar an einem Gehäuse(teil) der Turbomaschine befestigt, insbesondere integral mit diesem ausgebildet. Hierzu sind die Leitschaufeln fuß- bzw. gehäuseseitig mit radial äußeren Schaufelplattformen verbunden, insbesondere integral ausgebildet. Spitzen- bzw. rotorseitig können die Leitschaufeln mit radial inneren Schaufelplattformen verbunden, insbesondere integral ausgebildet sein.

Leit- und/oder Laufschaufelplattformen in Umfangsrichtung benachbarter Schaufeln können miteinander lösbar oder unlösbar verbunden, insbesondere integral ausgebildet sein.

Bereiche der Schaufelplattformen, die sich axial zwischen Schaufelvorder- und -hinterkante und in Umfangsrichtung zwischen benachbarten Schaufeln erstrecken, definieren zusammen mit den Schaufeln selber sowie gegebenenfalls Gehäuse- bzw. Rotoroberflächenbereichen Strömungskanäle für das Arbeitsfluid und somit das Lauf- bzw. Leitgitter. Diese Bereiche der Schaufelplattformen werden daher im Folgenden als *Gitterbereiche* bezeichnet.

Die Schaufelplattformen können jedoch axial stromauf- und/oder abwärts über diese Gitterbereiche bzw. Schaufelnvorder- bzw. Hinterkanten hinausragen. Diese Bereiche der Schaufelplattformen begrenzen einen Axialspalt, der sich axial zwischen dem Leit- und dem Laufgitter erstreckt, sie werden daher im Folgenden zusammenfassend als *Spaltbereiche* der Schaufelplattform bezeichnet.

Eine Schaufelplattform kann verschiedene solcher Spaltbereiche aufweisen. Beispielsweise können die radial inneren Schaufelplattformen eines Laufgitters, die sogenannten Rotorplattformen, einen radialen Absatz aufweisen, dessen Mantelfläche den Axialspalt radial begrenzt, und dessen Stirnseite den Axialspalt axial begrenzt.

Wenn in einer bevorzugten Ausführung eine axiale Rotorplattformverlängerung, ein sogenannter "Wing", in Form eines Ringflansches vorgesehen ist, der radial weiter innen angeordnet ist als der das Laufgitter definierende Gitterbereich, kann dieser Ringflansch ebenfalls einen Spaltbereich im Sinne der vorliegenden Erfindung bilden. Gleichermaßen kann ein axialer Ringflansch der radial inneren Leitschaufelplattformen, der radial weiter außen angeordnet ist als eine solche Rotorplattformverlängerung, einen Spaltbereich im Sinne der vorliegenden Erfindung bilden. Auch axiale Ringflansche, die an radial äußeren, d.h. rotorfernen Schaufelplattformen von Leit- und/oder Laufgittern ausgebildet sind, können einen Spaltbereich im Sinne der vorliegenden Erfindung bilden.

Wenn in einer bevorzugten Ausführung Laufschaufelspitzen oder -deckbänder, insbesondere dichtend, in einer gehäuseseitigen Aussparung angeordnet sind, kann der Gehäuseteil, in dem die Aussparung ausgebildet ist, einen Spaltbereich der Leitschaufelplattformen im Sinne der vorliegenden Erfindung bilden. Gleichermaßen kann eine radial äußere Laufschaufelplattform, die in der gehäuseseitigen Aussparung angeordnet ist, einen Spaltbereich im Sinne der vorliegenden Erfindung bilden.

Allgemein kann insbesondere ein radial innen oder außen mit wenigstens einer Leit- oder Laufschaufel verbundenes Bauteil, dessen Kontur den Axialspalt zwischen Lauf- und Leitgitter - gegebenenfalls zusammen mit weiteren Konturen - radial und/oder axial begrenzt, ein Spaltbereich einer Schaufelplattform im Sinne der vorliegenden Erfindung sein.

Eine Schaufelplattform kann Spaltbereiche mit mehreren Abschnitten aufweisen. Beispielsweise können die Schaufelplattformen eines Leit- oder Laufgitters einen oder mehrere radiale Absätze aufweisen, deren Mantelflächen den Axialspalt radial begrenzen und deren Stirnseiten den Axialspalt axial begrenzen. Bei solchen Spaltbereichen mit mehreren Abschnitten können sich die nachfolgenden Erläuterungen auf einen oder mehrere, insbesondere alle Abschnitte eines Spaltbereichs beziehen. Wenn also beispielsweise von einer Variation eines Spaltbereichs in radialer bzw. axialer Richtung die Rede ist, können zum Beispiel die Konturen einer oder mehrerer Mantelflächen in radialer Richtung bzw. einer oder mehrerer Stirnseiten in axialer Richtung variieren.

Erfindungsgemäß variiert eine Kontur eines oder mehrerer Spaltbereiche über den Umfang gesehen in axialer Richtung und optional zusätzlich in radialer Richtung. Unter einer Variation in radialer Richtung wird in fachüblicher Weise insbesondere ein Außenradius R der Kontur verstanden, der in Polarkoordinaten mit dem Umfangswinkel φ um die Rotationsachse der Turbomaschinenstufe variiert, unter einer Variation in axialer Richtung entsprechend insbesondere eine axiale Koordinate X der Kontur, die mit dem Umfangswinkel variiert. Vorzugsweise variiert die Kontur periodisch, insbesondere sinusartig:

$$R(\varphi) = R_0 + \Delta R \times \sin(\Omega_R \times \varphi + \Phi_R)$$

und/oder

$$X(\varphi) = X_0 + \Delta X \times \sin(\Omega_x \times \varphi + \Phi_x),$$

wobei

$$\varphi \in [0°, 360°]; R_0, \Delta R, X_0, \Delta X, \Omega_R, \Omega_x, \Phi_R, \Phi_x = \text{const.}$$

oder auch asymmetrisch.

Wie vorstehend ausgeführt kann diese Variation, die nachfolgend auch als Welligkeit bezeichnet wird, ausschließlich in axialer Richtung oder auch sowohl in axialer als auch radialer Richtung ausgebildet sein. Beispielsweise variiert die Kontur eines zylinderförmigen Spaltbereiches mit ebener Stirnseite und gewellter Mantelfläche ausschließlich in radialer Richtung, diejenige eines zylinderförmigen Spaltbereiches mit gewellter Stirnseite und ebener Mantelfläche ausschließlich in axialer Richtung und diejenige eines zylinderförmigen Spaltbereiches mit gewellter Stirnseite und gewellter Mantelfläche ebenso wie diejenige eines kegelförmigen Spaltbereiches mit gewellter Mantelfläche sowohl in axialer als auch radialer Richtung.

Eine in radialer Richtung über den Umfang variierende Kontur weist eine maximale und eine minimale Erstreckung in radialer Richtung zu dem Gitter der Kontur hin auf.

Variiert die Kontur eines radial inneren Spaltbereichs, also einer Fußplattform einer Laufschaufel oder eines Deckbandes einer Leitschaufel, in radialer Richtung, so weist die Kontur im Bereich einer maximalen Erstreckung in radialer Richtung zu dem Lauf- bzw. Leitgitter der Kontur hin, d.h. radial nach außen, den maximalen Radius auf, bei der vorstehend erläuterten sinusartigen Variation beispielsweise $R_0 + \Delta R$, im Bereich einer minimalen Erstreckung entsprechend den minimalen Radius, bei einer sinusartigen Variation beispielsweise $R_0 - \Delta R$.

Variiert die Kontur eines radial äußeren Spaltbereichs, also einer Fußplattform einer Leitschaufel oder eines Deckbandes einer Laufschaufel, in radialer Richtung, so weisen umgekehrt die maximalen Erstreckungen in radialer Richtung zu dem Lauf- bzw. Leitgitter der Kontur hin, d.h. radial nach innen, die minimalen Radien bzw. Abstände zur Rotationsachse der Turbomaschinenstufe auf, bei der vorstehend erläuterten sinusartigen Variation beispielsweise $R_0$ - $\Delta R$, die minimalen Erstreckungen entsprechend die maximalen Radien, bei einer sinusartigen Variation beispielsweise $R_0 + \Delta R$.

Zur kompakteren Darstellung werden also insbesondere radial äußere Wellenberge eines radial inneren gewellten Spaltbereichs und radial innere Wellentäler eines radial äußeren gewellten Spaltbereichs einheitlich als maximale Erstreckung in radialer Richtung zu dem Gitter hin bezeichnet.

Als maximale Variation wird entsprechend die betragsmäßige Differenz zwischen maximaler und minimaler Erstreckung bezeichnet, bei der vorstehend erläuterten sinusartigen Variation also beispielsweise $2 \times \Delta R$.

Entsprechend weist eine in axialer Richtung über den Umfang variierende Kontur eine minimale und eine maximale Erstreckung in axialer Richtung von dem Gitter der Kontur weg auf. Variiert die Kontur eines radial inneren oder äußeren Spaltbereichs einer Leit- oder Laufschaufel in axialer Richtung, so weist die maximale Erstreckung in axialer Richtung von dem Leit- bzw. Laufgitter weg, d.h. axial nach außen, von einer minimale Erstreckung in axialer Richtung aus einen Abstand bzw. eine maximale axiale Variation auf, bei der vorstehend erläuterten sinusartigen Variation beispielsweise $2 \times \Delta X$.

Erfindungsgemäß beträgt eine solche maximale Variation in radialer Richtung höchstens 50%, vorzugsweise höchstens 40% und insbesondere höchstens 30% der Schaufelteilung dieses Gitters, wobei die maximale Erstreckung in radialer Richtung zu dem Gitter der Kontur hin in Umfangsrichtung von einer Schaufelkante dieses Gitters höchstens 50%, insbesondere höchstens 25% der Schaufelteilung dieses Gitters entfernt angeordnet ist.

Zusätzlich oder alternativ beträgt eine maximale Variation in axialer Richtung höchstens 50%, vorzugsweise höchstens 40% und insbesondere höchstens 30% der Schaufelteilung dieses Gitters, wobei die maximale Erstreckung in axialer Richtung von dem Gitter der Kontur weg in Umfangsrichtung von einer Schaufelkante dieses Gitters höchstens 50%, insbesondere höchstens 25% der Schaufelteilung dieses Gitters entfernt angeordnet ist.

Als Schaufelteilung wird vorliegend insbesondere der Abstand in Umfangsrichtung zwischen benachbarten Schaufelkanten, insbesondere Schaufelvorder- oder -hinterkanten, bezeichnet. Er kann insbesondere einem Nennumfang dividiert durch die Schaufelzahl n entsprechen ($2\pi R_0/n$).

Durch diese Anordnung von maximalen axialen und/oder radialen Erstreckungen in der Nähe der Schaufelkante und die gleichzeitige Limitierung der maximalen axialen und/oder radialen Variationen kann eine verbesserte Strömung durch die Turbomaschinenstufe erreicht werden.

In einer bevorzugten Ausführung ist eine maximale radiale und/oder axiale Erstreckung in einem druckseitigen Bereich einer Schaufelvorderkante, d.h. in Umfangsrichtung in der druckseitigen Hälfte, insbesondere dem druckseitigen Viertel der Schaufelteilung angeordnet. Zusätzlich oder alternativ kann eine maximale radiale und/oder axiale Erstreckung in einem saugseitigen Bereich einer Schaufelhinterkante, d.h. in Umfangsrichtung in der saugseitigen Hälfte, insbesondere dem saugseitigen Viertel der Schaufelteilung angeordnet sein.

Die Welligkeit kann ausschließlich bei einem oder mehreren Spaltbereichen von radial inneren und/oder äußeren Leitschaufelplattformen, ausschließlich bei einem oder mehreren Spaltbereichen von radial inneren und/oder äußeren Laufschaufelplattformen oder auch sowohl bei einem oder mehreren Spaltbereichen von radial inneren und/oder äußeren Leit- und Laufschaufelplattformen ausgebildet sein. Dabei kann eine Kontur eines Spaltbereiches einer Schaufelplattform von einem von dem Leit- und dem Laufgitter und eine dieser axial und/oder radial gegenüberliegende Kontur eines Spaltbereiches einer Schaufelplattform von dem anderen von dem Leit- und dem Laufgitter über den Umfang vorzugsweise gleichartig, insbesondere parallel oder mit einem Phasenversatz variieren, der bevorzugt wenigstens 45°, insbesondere wenigstens 90°, vorzugsweise wenigstens 135° beträgt und/oder bevorzugt höchstens 270°, insbesondere höchstens 210° und vorzugsweise höchstens 180° beträgt.

Ein Spaltbereich kann zwei gegenüberliegende Konturen aufweisen wie beispielsweise eine Innen- und eine Außenumfangsfläche eines Ringflansches wie insbesondere einer Rotorplattformverlängerung. Diese beiden gegenüberliegenden Konturen können über den Umfang variieren, vorzugsweise verschieden- oder gleichartig, insbesondere parallel oder mit einem Phasenversatz, der bevorzugt wenigstens 45°, insbesondere wenigstens 90°, vorzugsweise wenigstens 135° beträgt und/oder bevorzugt höchstens 270°, insbesondere höchstens 210° und vorzugsweise höchstens 180° beträgt. Variieren die beiden Konturen parallel, bleibt die Wandstärke des Spaltbereiches konstant. Gleichermaßen kann vorgesehen sein, dass bei gegenüberliegenden Konturen auch nur eine Kontur, bei einer ringflanschartigen Rotorplattformverlängerung vorzugsweise die radial innenliegende Kontur, variiert, während die andere über den Umfangs konstant ist.

Allgemein kann eine gesamte Kontur eines Spaltbereiches, beispielsweise die gesamte Außenmantelfläche eines Ringflansches, über den Umfang variieren. Gleichermaßen ist es auch möglich, dass nur ein Teilabschnitt der Kontur eine Welligkeit aufweist, beispielsweise die Außenmantelfläche eines Ringflansches nur in einem oder mehreren axialen Abschnitten in radialer Richtung variiert oder eine Stirnfläche nur in einem oder mehreren radialen Abschnitten in axialer Richtung variiert.

Eine radiale Variation einer Kontur eines Spaltbereichs einer Schaufelplattform eines Gitters kann in axialer Richtung konstant sein, so dass Wellentäler bzw. -spitzen parallel zur Rotationsachse der Turbomaschinenstufe ausgerichtet sind. Gleichermaßen kann eine radiale Variation einer Kontur eines Spaltbereichs einer Schaufelplattform eines Gitters auch in axialer Richtung variieren, so dass Wellentäler bzw. -spitzen schräg zur Rotationsachse verlaufen. Insbesondere kann ein Phasenversatz vorgesehen sein, der sich mit der axialen Position x, vorzugsweise linear, ändert:

$$R(\varphi, x) = R_0 + \Delta R \times \sin(\Omega_R \times \varphi + \Phi_R \times x)$$

Gleichermaßen kann eine axiale Variation einer Kontur eines Spaltbereichs einer Schaufelplattform eines Gitters in radialer Richtung konstant sein, so dass Wellentäler bzw. -spitzen senkrecht zur Rotationsachse der Turbomaschinenstufe ausgerichtet sind. Gleichermaßen kann eine axialer Variation einer Kontur eines Spaltbereichs einer Schaufelplattform eines Gitters auch in radialer Richtung variieren, so dass Wellentäler bzw. -spitzen schräg zur Rotationsachse geneigt sind. Auch hier kann insbesondere ein Phasenversatz vorgesehen sein, der sich mit der radialen Position r, vorzugsweise linear, ändert:

$$X(\varphi, r) = X_0 + \Delta X \times \sin(\Omega_x \times \varphi + \Phi_x \times r)$$

In einer bevorzugten Ausführung variiert zusätzlich zu wenigstens einem Spaltbereich auch der Gitterbereich der Schaufelplattform, wenigstens abschnittsweise, über den Umfang in einer der vorstehend erläuterten Arten. In einer vorteilhaften Weiterbildung geht dann ein Spaltbereich, dessen Kontur über den Umfang variiert, glatt in diesen Gitterbereich über, insbesondere derart, dass ein Wellental der Spaltbereichkontur in ein Wellental des Gitterbereichs übergeht, eine Wellenspitze der Spaltbereichkontur in eine Wellenspitze des Gitterbereichs. Unter einem glatten Übergang wird dabei in fachüblicher Weise insbesondere ein Übergang ohne scharfe Kanten oder Knicke bezeichnet, vorzugsweise mit einer stetigen Krümmung.

Weitere Merkmale und Vorteile ergeben sich aus den Unteransprüchen und den Ausführungsbeispielen. Hierzu zeigt, teilweise schematisiert:

Fig. 1:     eine Abwicklung eines Teils einer Gasturbinenstufe mit einem Leit- und Laufgitter mit radial inneren Schaufelplattformen, deren Spaltbereichskontur in axialer Richtung über den Umfang variiert;

Fig. 2:     eine axiale Draufsicht eines Leit- oder Laufgitters einer Gasturbinenstufe mit radial inneren Schaufelplattformen, deren Spaltbereichskontur in radialer Richtung über den Umfang variiert; und

Fig. 3:     einen Meridianschnitt einer erfindungsgemäßen Gasturbinenstufe mit einer ringflanschartigen Schaufelplattformverlängerung.

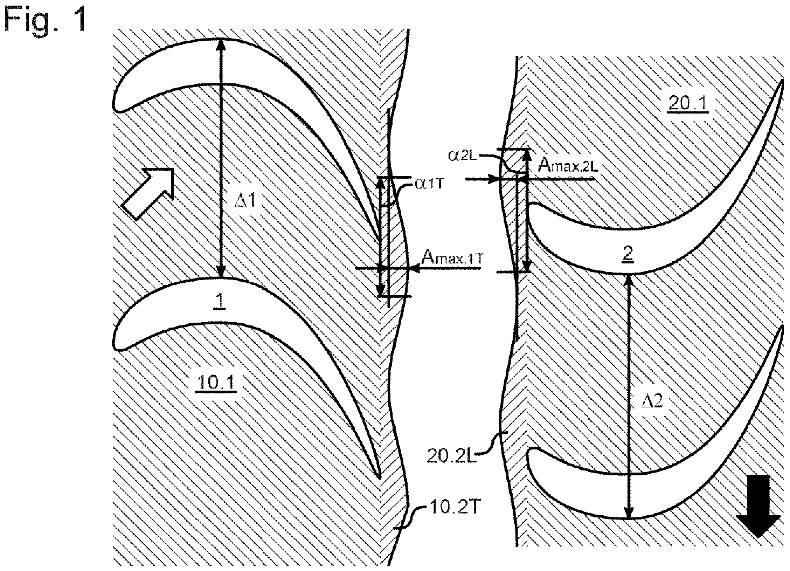

Fig. 1 zeigt eine Abwicklung eines Teils einer Gasturbinenstufe mit einem feststehenden Leitgitter mit Leitschaufeln 1 und einem demgegenüber rotierenden Laufgitter mit Laufschaufeln 2. Die Rotation ist durch einen ausgefüllten vertikalen Pfeil angedeutet, die Durchströmung mit Arbeitsfluid durch einen leeren Pfeil im Bereich des Leitgitters. Diese Konfiguration ist rein exemplarisch zur Erläuterung, die vorliegende Erfindung kann gleichermaßen bei Turbinen- und Kompressorstufen eingesetzt werden, bei denen das Leitgitter stromauf und/oder stromab vom Laufgitter angeordnet ist.

Integral mit den Schaufeln 1, 2 sind radial innere Schaufelplattformen ausgebildet, auf die man in Fig. 1 von oben blickt. Dabei kann jede Schaufel eine eigene Schaufelplattform aufweisen, es können auch mehrere oder alle Schaufeln eines Gitters mit derselben Schaufelplattform verbunden, insbesondere integral ausgebildet sein, die dann im Sinne der vorliegenden Erfindung gedanklich in einzelne, den einzelnen Schaufeln zugeordnete Schaufelplattformen aufgeteilt werden können. Daher sind in Fig. 1 keine Schaufelplattformgrenzen in Umfangsrichtung (vertikal in Fig. 1) dargestellt.

Axial zwischen Vorder- (links in Fig. 1) und Hinterkante (rechts in Fig. 1) erstreckt sich jeweils ein Gitterbereich 10.1 bzw. 20.1 der Leit- bzw. Laufschaufelplattformen, der in Fig. 1 durch eine von links oben nach rechts unten fallende Schraffierung angedeutet ist.

Dieser geht jeweils in einen axial über die Leitschaufelhinter- bzw. Laufschaufelvorderkanten hinausragenden Schaufelplatten-Spaltbereich 10.2T bzw. 20.2L über, der in Fig. 1 durch eine von links unten nach rechts oben steigende Schraffierung angedeutet ist. Dieser Spaltbereich 10.2T bzw. 20.2L weist im Wesentlichen die Form eines radialen Absatzes auf, dessen den Gittern zugewandte Mantelfläche und dessen dem jeweils anderen Gitter zugewandte Stirnfläche einen radial inneren Axialspalt zwischen Lauf- und Leitgitter radial bzw. axial begrenzen.

Die Kontur des Hinterkanten-Spaltbereiches 10.2T des Leitgitters, insbesondere dessen dem Laufgitter zugewandte Stirnfläche, variiert in axialer Richtung, wie in der Draufsicht bzw. Abwicklung der Fig. 1 erkennbar, über den Umfang, d.h. in Fig. 1 in vertikaler Richtung. D.h., Erzeugende der Stirnfläche, die sich von der Rotationsachse der Turbomaschine zur Umfangskante des radialen Absatzes erstrecken, weisen unterschiedliche axiale Positionen auf, so dass die Stirnfläche in axialer Richtung an bestimmten Umfangspositionen eine maximale axiale Erstreckung und an anderen Umfangspositionen eine minimale axiale Erstreckung von dem Laufgitter weg, d.h. in Fig. 1 nach rechts, aufweist. Im Ausführungsbeispiel variieren die axialen Positionen der Erzeugenden sinusartig mit einer Amplitude von $A_{max, 1T}/2$, so dass sich eine maximale axiale Variation von $A_{max, 1T}$ ergibt, die in Fig. 1 eingezeichnet ist.

Dabei ist die maximale axiale Erstreckung des Hinterkanten-Spaltbereiches 10.2T des Leitgitters in der Nähe einer Laufschaufel-Hinterkante angeordnet. Hierzu ist in Fig. 1 ein Bereich $\alpha_{1T}$ angegeben, der 50% der Leitschaufelteilung $\Delta 1$ beträgt ($\alpha_{1T} = 0,5 \times \Delta 1$). Man erkennt, dass die maximale axiale Erstreckung des Hinterkanten-Spaltbereiches 10.2T des Leitgitters in diesem Bereich $\alpha_{1T}$ um die Leitschaufel-Hinterkante angeordnet, d.h. maximal 50% der Leitschaufelteilung $\Delta 1$ entfernt ist.

In entsprechender Weise variiert auch die Kontur des Vorderkanten-Spaltbereiches 20.2L des Laufgitters, insbesondere dessen dem stromaufwärtigen Leitgitter zugewandte Stirnfläche, in axialer Richtung über den Umfang, so dass die Stirnfläche in axialer Richtung an bestimmten Umfangspositionen eine maximale axiale Erstreckung und an anderen Umfangspositionen eine minimale axiale Erstreckung von dem Leitgitter weg, d.h. in Fig. 1 nach links, aufweist. Im Ausführungsbeispiel variieren die axialen Positionen der Erzeugenden sinusartig mit einer Amplitude von $A_{max, 2L}/2$, so dass sich eine maximale axiale Variation von $A_{max, 2L}$ ergibt, die in Fig. 1 eingezeichnet ist.

Dabei ist die maximale axiale Erstreckung des Vorderkanten-Spaltbereiches 20.2L des Laufgitters in der Nähe einer Leitschaufel-Vorderkante angeordnet. Hierzu ist in Fig. 1 ein Bereich $\alpha_{2L}$ angegeben, der 50% der Leitschaufelteilung $\Delta 2$ beträgt ($\alpha_{2L} = 0,5 \times \Delta 2$). Man erkennt, dass die maximale axiale Erstreckung des Vorderkanten-Spaltbereiches 20.2L des Laufgitters in diesem Bereich $\alpha_{2L}$ um die Laufschaufel-Vorderkante angeordnet, d.h. maximal 50% der Leitschaufelteilung $\Delta 2$ entfernt ist.

Die Erzeugenden sind erfindungsgemäß gegenüber der Rotationsachse der Turbomaschine um einen in Umfangsrichtung variierenden Winkel geneigt.

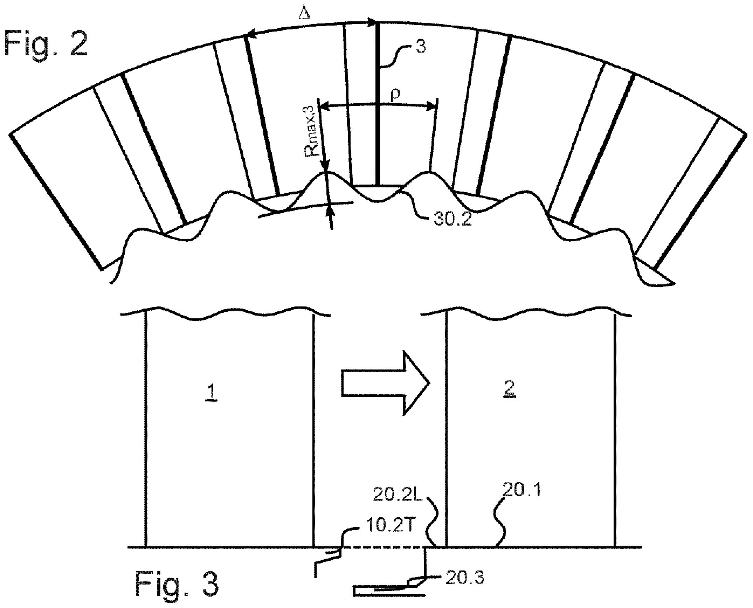

Fig. 2 zeigt eine Draufsicht in axialer Richtung auf ein Leit- oder Laufgitter einer Gasturbinenstufe mit radial inneren Schaufelplattformen, deren Spaltbereichskontur in radialer Richtung über den Umfang variiert. Hierbei kann es sich insbesondere um die vorstehend mit Bezug auf Fig. 1 erläuterte Gasturbinenstufe handeln, so dass eine Welligkeit in radialer und axialer Richtung kombiniert sind. Daher wird nachfolgend auf die vorangehende Beschreibung Bezug genommen und nachfolgend nur auf die Aspekte der radialen Welligkeit eingegangen. Gleichermaßen ist es auch möglich, nur eine axiale Welligkeit wie vorstehend mit Bezug auf Fig. 1 erläutert, oder nur eine radiale Welligkeit, wie sie nachfolgend erläutert wird, vorzusehen.

Fig. 2 zeigt in einer axialen Draufsicht fett hervorgehobene Kanten von Schaufeln 3 eines Gitters einer Gasturbine. Dabei kann es sich gleichermaßen um Vorder- oder Hinterkanten von Leit- oder Laufschaufeln handeln, Fig. 2 also eine Draufsicht in oder entgegen der Strömungsrichtung darstellen. Insoweit stellt Fig. 2 eine kompakte Darstellung unterschiedlicher Aspekte dar. Beispielsweise kann sie als Draufsicht in Strömungsrichtung auf Laufschaufeln verstanden werden, die fett hervorgehobenen Kanten entsprechen dann Vorderkanten, die Schaufeln 3 beispielsweise den Laufschaufeln 2 der Fig. 1, der radial innere Spaltbereich 30.2 deren Vorderkanten-Spaltbereich 20.2L, wobei man im Wesentlichen auf die Druckseite der jeweiligen Laufschaufel blickt. Gleichermaßen kann die Fig. 2 beispielsweise auch als Draufsicht entgegen der Strömungsrichtung auf Leitschaufeln verstanden werden, die fett hervorgehobenen Kanten entsprechen dann Hinterkanten, die Schaufeln 3 beispielsweise den Leitschaufeln 1 der Fig. 1, der radial innere Spaltbereich 30.2 deren Hinterkanten-Spaltbereich 10.2T, wobei man nur auf die Saugseite der jeweiligen Leitschaufel blickt.

Die Mantelfläche des Spaltbereichs 30.2 weist alternierend maximale und minimale radiale Erstreckungen radial nach außen, d.h. zum Gitter hin (nach oben in Fig. 2), auf. Man erkennt, dass die Mantelfläche des Spaltbereichs 30.2 in Umfangsrichtung sinusartig mit einer Amplitude $R_{max, 3}/2$ variiert. Dabei ist die maximale radiale Erstreckung des Spaltbereiches 30.2 in der Nähe der Kante der Schaufel 3 angeordnet. Hierzu ist in Fig. 2 ein Bereich p angegeben, der 50% der Leitschaufelteilung $\Delta$ beträgt ($p = 0,5 \times \Delta$). Man erkennt, dass die maximale radiale Erstreckung des Spaltbereiches 30.2 zum Gitter hin (nach oben in Fig. 2) in diesem Bereich p um die Schaufelkante angeordnet, d.h. maximal 50% der Schaufelteilung $\Delta$ entfernt ist.

Versteht man Fig. 2 beispielsweise als Draufsicht in Strömungsrichtung auf Laufschaufeln, so sind die maximalen radialen Erstreckung des Vorderkanten-Spaltbereiches 30.2 (gerade noch) in der druckseitigen Hälfte des Segments zwischen zwei aufeinanderfolgenden Laufschaufelvorderkanten angeordnet. Versteht man Fig. 2 beispielsweise als Draufsicht entgegen der Strömungsrichtung auf Leitschaufeln, so sind die maximalen radialen Erstreckung des Hinterkanten-Spaltbereiches 30.2 (gerade noch) in der saugseitigen Hälfte des Segments zwischen zwei aufeinanderfolgenden Leitschaufelhinterkanten angeordnet.

Zusätzlich oder alternativ zu einem radialabsatzförmigen Spaltbereich 20.2L können die inneren Laufschaufelplattformen eine Laufschaufelplattformverlängerung 20.3 aufweisen. Diese ist, wie in Fig. 3 dargestellt, vorzugsweise ringflanschartig ausgebildet. Die radial außenliegende (oben in Fig. 3) und/oder die radial innenliegende (unten in Fig. 3) Mantelfläche dieses Ringflansches 20.3 kann über seine gesamte Länge oder auch nur abschnittsweise eine radiale Welligkeit aufweisen, wie sie vorstehend mit Bezug auf den Spaltbereich 20.2L erläutert wurde, die jedoch in Fig. 3 zur besseren Übersichtlichkeit nicht gezeichnet ist. Insbesondere kann der Ringflansch 20.3 eine konstante Wandstärke aufweisen, indem beiden Mantelflächen parallel zueinander über den Umfang variieren.

Zusätzlich oder alternativ kann auch die axiale Stirnseite des Ringflansches 20.3 und/oder die diesem zugewandte radial innenliegende Mantelfläche des Spaltbereichs 10.2T eine Welligkeit aufweisen.

Zusätzlich oder alternativ zu dem radialabsatzförmigen Spaltbereich 20.2L und/oder einer Laufschaufelplattformverlängerung 20.3 können Spaltbereiche von radial äußeren Laufschaufelplattformen und/oder Spaltbereiche von radial äußeren Leitschaufelplattformen, die die radial äußeren Laufschaufelplattformen aufnehmen, eine radiale und/oder axiale Welligkeit aufweisen (nicht dargestellt). In einer ebenfalls nicht dargestellten Abwandlung können zusätzlich oder alternativ auch Vorderkanten-Spaltbereiche von Leitschaufeln und/oder Hinterkanten-Spaltbereiche von Laufschaufeln eine radiale und/oder axiale Welligkeit aufweisen, wie sie vorstehend mit Bezug auf Fig. 1, 2 beschrieben wurde.

Bezugszeichenliste

| 1 | **Lei**tschaufel |
| 2 | **Lauf**schaufel |
| 3 | (Leit- oder Lauf)Schaufel(kante) |

| 10.1/20.1 | Gitterbereich der radial inneren Schaufelplattform des Leit/Laufgitters |
| 10.2T | Hinterkanten- ("Trailing edge")Spaltbereich der radial inneren Schaufel-plattform des Leitgitters |
| 20.2**L** | Vorderkanten- ("Leading edge")Spaltbereich der radial inneren Schaufel-plattform des Laufgitters |
| 30.2 | Spaltbereich einer radial inneren Schaufelplattform eines (Leit- oder Lauf)Gitters |
| 20.3 | Plattformverlängerung ("Wing", Spaltbereich) der Laufschaufelplattform |
| $A_{max,\,1T}$ | maximale axiale Variation/Erstreckung des Hinterkanten-Spaltbereich |
| $A_{max,\,2L}$ | maximale axiale Variation/Erstreckung des Vorderkanten-Spaltbereich |
| $R_{max,\,3}$ | maximale radiale Variation/Erstreckung |
| $\Delta(1/2)$ | Schaufelteilung (des Leit-/Laufgitters) |

**Patentansprüche**

1. Turbomaschinenstufe mit Leitschaufeln (1, 3), radial inneren und/oder radial äußeren Schaufelplattformen, die zusammen ein Leitgitter bilden, und mit Laufschaufeln (2, 3), radial inneren und/oder radial äußeren Schaufelplattformen, die zusammen ein dem Leitgitter benachbartes Laufgitter bilden, wobei Schaufelplattformen Gitterbereiche (10.1, 20.1), die sich zwischen in Umfangsrichtung benachbarten Schaufeln erstrecken, und Spaltbereiche (10.2T, 20.2L, 20.3, 30.2) aufweisen, wobei die Spaltbereiche im Wesentlichen die Form eines radialen Absatzes aufweisen, dessen den Gittern zugewandte Mantelfläche und dessen dem jeweils anderen Gitter zugewandte Stirnfläche einen Axialspalt zwischen dem Lauf- und Leitgitter radial bzw axial begrenzen, wobei eine Kontur eines Hinterkanten-Spaltbereiches (10.2T) des Leitgitters, nämlich dessen dem Laufgitter zugewandte Stirnfläche, in axialer Richtung über den Umfang variiert, so dass Erzeugende der Stirnfläche, die sich von der Rotationsachse der Turbomaschine zur Umfangskante des radialen Absatzes erstrecken, unterschiedliche axiale Positionen aufweisen, wobei in entsprechender Weise auch eine Kontur eines Vorderkanten-Spaltbereiches (20.2L) des Laufgitters, nämlich dessen dem stromaufwärtigen Leitgitter zugewandte Stirnfläche, in axialer Richtung über den Umfang variiert, wobei die Erzeugenden der Stirnflächen gegenüber der Rotationsachse der Turbomaschine um einen in Umfangsrichtung variierenden Winkel geneigt sind, wobei eine maximale Erstreckung dieser Kontur in axialer Richtung von dem Gitter weg in Umfangsrichtung von einer Schaufelkante dieses Gitters höchstens 50% der Schaufelteilung dieses Gitters entfernt angeordnet ist, wobei eine maximale Variation dieser Kontur in axialer Richtung höchstens 50% der Schaufelteilung dieses Gitters beträgt.

2. Turbomaschinenstufe nach Anspruch 1, **dadurch gekennzeichnet, dass** diese maximale Erstreckung im druckseitigen Bereich einer Schaufelvorderkante oder im saugseitigen Bereich einer Schaufelhinterkante angeordnet ist.

3. Turbomaschinenstufe nach einem der vorhergehenden Ansprüche, **dadurch gekennzeichnet, dass** eine Kontur eines Spaltbereiches (10.2) einer Schaufelplattform von einem von dem Leit- und dem Laufgitter und eine dieser axial und/oder radial gegenüberliegende Kontur eines Spaltbereiches (20.2) einer Schaufelplattform von dem anderen von dem Leit- und dem Laufgitter über den Umfang, insbesondere gleichartig, variieren.

4. Turbomaschinenstufe nach einem der vorhergehenden Ansprüche, **dadurch gekennzeichnet, dass** eine radiale Variation einer Kontur eines Spaltbereichs einer Schaufelplattform eines Gitters in axialer Richtung variiert oder konstant ist und/oder dass zwei radial gegenüberliegende, über den Umfang variierende Konturen eines Spaltbereiches über den Umfang gleichartig mit einem Phasenversatz oder verschiedenartig variieren und/oder dass eine maximale Erstreckung dieser Kontur in radialer Richtung zu dem Gitter der Kontur hin in Umfangsrichtung von einer Schaufelkante dieses Gitters höchstens 50% der Schaufelteilung dieses Gitters entfernt angeordnet ist, wobei eine maximale Variation dieser Kontur in radialer Richtung höchstens 50% der Schaufelteilung dieses Gitters beträgt.

5. Turbomaschinenstufe nach einem der vorhergehenden Ansprüche, **dadurch gekennzeichnet, dass** ein Spaltbereich (20.2) einer Schaufelplattform eines Gitters, dessen Kontur über den Umfang variiert, glatt in den Gitterbereich (20.1) der Schaufelplattform übergeht, dessen Kontur in radialer und/oder axialer Richtung über den Umfang wenigstens abschnittsweise variiert.

6. Turbomaschine, insbesondere Gasturbine, vorzugsweise Flugtriebwerk-Gasturbine, mit wenigstens einer Turbomaschinenstufe, insbesondere einer Kompressor- oder Turbinenstufe, nach einem der vorhergehenden Ansprüche.

**Claims**

1. Turbomachine stage having stator blades (1, 3), radially inner and/or radially outerblade platforms, which together form a stator cascade, and having rotor blades (2, 3), radially inner and radially outer blade platforms, which together form a rotor cascade adjacentto the stator cascade, wherein blade platforms comprise cascade regions (10.1, 20.1) which extend between blades that are adjacent in the circumferential direction, and gap regions (10.2T, 20.2L, 20.3, 30.2), wherein the gap regions are substantially in the form of a radial projection of which the outer surface facing the cascades and the end face facing the other cascade in each case radially and/or axially deli mit an axial gap between the stator cascade and rotor cascade, wherein a contour of a trailing edge gap region (10.2T) of the rotor cascade, specifically the end face thereof facing the stator cascade, varies in the axial direction over the circumference, such that generators of the end face which extend from the axis of rotation of the turbomachine towards the circumferential edge of the radial projection have different axial positions, wherein a contour of a leading edge gap region (20.2L) of the rotor cascade, specifically the end face thereof facing the upstream stator cascade, correspondingly varies in the axial direction over the circumference, wherein the generators of the end faces are inclined with respect to the axis of rotation of the turbomachine by an angle varying in the circumferential direction, wherein a maximum extension of this contour in the axial direction away from the cascade is arranged at a distance from a blade edge of this cascade in the circumferential direction of at most 50% of the blade pitch of this cascade, wherein a maximum variation of this contour in the axial direction is at most 50% of the blade pitch of this cascade.

2. Turbomachine stage according to claim 1, **characterized in that** this maximum extension is arranged in the pressure-side region of a blade leading edge or in the suction-side region of a blade trailing edge.

3. Turbomachine stage according to either of the preceding claims, **characterized in that** a contour of a gap region (10.2) of a blade platform of one of either the stator cascade and rotor cascade and a contour, axially and/or radially opposing this contour, of a gap region (20.2) of a blade platform of the other of either the stator cascade and rotor cascade vary over the circumference, in particular identically.

4. Turbomachine stage according to any of the preceding claims, **characterized in that** a radial variation of a contour of a gap region of a blade platform of a cascade varies or is constant in the axial direction and/or **in that** two radially opposite contours of a gap region that vary over the circumference vary over the circumference identically with a phase offset or in different ways and/or **in that** a maximum extension of this contour in the radial direction towards the cascade of the contour in the circumferential direction is arranged at a distance from a blade edge of this cascade of at most 50% of the blade pitch of this cascade, a maximum variation of this contour in the radial direction being at most 50% of the blade pitch of this cascade.

5. Turbomachine stage according to any of the preceding claims, **characterized in that** a gap region (20.2) of a blade platform of a cascade of which the contour varies over the circumference transitions smoothly into the cascade region (20.1) of the blade platform of which the contour varies in the radial and/or axial direction over the circumference.

6. Turbomachine, in particular a gas turbine, preferably an aircraft gas turbine, comprising at least one turbomachine stage, in particulara compressor stage or turbine stage, according to any of the preceding claims.

**Revendications**

1. Étage de turbomachine comportant des aubes directrices (1,3), des plates-formes d'aubes radialement intérieures et/ou radialement extérieures, lesquelles forment ensemble une grille directrice, et comportant des aubes mobiles (2, 3), des plates-formes d'aubes radialement intérieures et/ou radialement extérieures, lesquelles forment ensemble une grille mobile adjacente à la grille directrice, dans lequel les plates-formes d'aubes présentent des zones de grilles (10.1, 20.1), lesquelles s'étendent entre des aubes adjacentes dans la direction circonférentielle et des zones de fente (10.2T, 20.2L, 20.3, 30.2), dans lequel les zones de fente

   présentent sensiblement la forme d'un épaulement radial, dont la surface latérale, tournée vers la grille, et la face frontale, tournée vers l'autre grille respective, délimitent radialement ou axialement une fente axiale entre la grille mobile et la grille directrice, dans lequel un contour d'une zone de fente de bord de fuite (10.2T) de la grille directrice, dont la face frontale est notamment tournée vers la grille mobile, varie dans la direction axiale sur la circonférence de telle sorte que des génératrices de la face frontale, lesquelles s'étendent de l'axe de rotation de la turbomachine jusqu'au bord circonférentiel de l'épaulement radial, présentent des positions axiales différentes, dans lequel de manière correspondante, un contour d'une zone de fente de bord d'attaque (20.2L) de la grille mobile, dont la face frontale est notamment tournée vers la grille directrice en amont, varie également dans la direction axiale sur la circonférence, dans lequel les génératrices des faces frontales

   sont inclinées par rapport à l'axe de rotation de la turbomachine à un angle variant dans la direction circonférentielle, dans lequel une extension maximale dudit contour est disposée, dans la direction axiale par rapport à la grille et dans la direction circonférentielle à partir d'un bord d'aube de ladite grille, à une distance d'au plus 50 % du pas d'aube de ladite grille, dans lequel une variation maximale dudit contour dans la direction axiale représente au plus 50 % du pas d'aube de ladite grille.

2. Étage de turbomachine selon la revendication 1, **caractérisé en ce que** ladite extension maximale est disposée dans la zone du côté refoulement d'un bord d'attaque d'aube ou dans la zone du côté aspiration d'un bord de fuite d'aube.

3. Étage de turbomachine selon l'une quelconque des revendications précédentes, **caractérisé en ce qu'**un contour d'une zone de fente (10.2) d'une plate-forme d'aube de la grille directrice ou de la grille mobile, et un contour axialement et/ou radialement opposé d'une zone de fente (20.2) d'une plate-forme d'aube de l'autre de la grille directrice ou de la grille mobile varient sur la circonférence, en particulier de la même manière.

4. Étage de turbomachine selon l'une quelconque des revendications précédentes, **caractérisé en ce qu'**une variation radiale d'un contour d'une zone de fente d'une plate-forme d'aube d'une grille varie ou est constante dans la direction axiale et/ou **en ce que** deux contours, radialement opposés et variant sur la circonférence, d'une zone de fente varient sur la circonférence de la même manière avec un déphasage ou de manière différente et/ou **en ce qu'**une extension maximale dudit contour est disposée, dans la direction radiale en allant vers la grille du contour et dans la direction circonférentielle à partir d'un bord d'aube de ladite grille, à une distance d'au plus 50 % du pas d'aube de ladite grille, dans lequel une variation maximale dudit contour dans la direction radiale représente au plus 50 % du pas d'aube de ladite grille.

5. Étage de turbomachine selon l'une quelconque des revendications précédentes, **caractérisé en ce qu'**une zone de fente (20.2) d'une plate-forme d'aube d'une grille, dont le contour varie sur la circonférence, se confond de manière plate dans la zone de grille (20.1) de la plate-forme d'aube, dont le contour varie au moins par sections dans la direction radiale et/ou axiale sur la circonférence.

6. Turbomachine, en particulierturbine à gaz, de préférence turbine à gaz de moteur d'aéronef, comportant au moins un étage de turbomachine, en particulier un étage de compresseur ou de turbine, selon l'une quelconque des revendications précédentes.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2372102 A2
- EP 2136033 A1
- EP 1067273 A1
- EP 1515000 A1
- EP 2369138 A1